# EUROPEAN PATENT SPECIFICATION

(11) **EP 1 437 786 B1**
(45) Date of publication and mention of the grant of the patent: **24.02.2010**
(21) Application number: 03022852.2
(22) Date of filing: 08.10.2003
(51) Int. Cl.: H01M 8/10, H01M 8/02

(54) **Fuel cell and process for the production of same**
Brennstoffzelle und Herstellungsverfahren
Pile à combustible et sa méthode de fabrication

(30) Priority: 10.10.2002 JP 2002297749
(43) Date of publication of application: 14.07.2004
(73) Proprietor: Panasonic Corporation, Kadoma-shi Osaka 571-8501 (JP); Asahi Glass Company, Limited, Chiyoda-ku Tokyo 100-8405 (JP)
(72) Inventor: Gyoten, Hisaaki, Shizyounawate-shi Osaka 570-0013 (JP); Hatoh, Kazuhito, Osaka 563-0015 (JP); Kosako, Shinya, Nada-ku, Kobe-shi Hyogo 657-0015 (JP)
(74) Representative: Leinweber & Zimmermann

(56) References cited:
- EP-A- 1 063 334
- EP-A- 1 085 038
- PATENT ABSTRACTS OF JAPAN vol. 1995, no. 08, 29 September 1995 (1995-09-29) & JP 07 135003 A (TOYOTA MOTOR CORP), 23 May 1995 (1995-05-23)

## Description

### BACKGROUND OF THE INVENTION

### Field of the Invention

The present invention relates to a normally operating fuel cell for use in portable power supply, power supply for electric cars, household cogeneration systems, etc., and a process for the production thereof.

### Related Art of the Invention

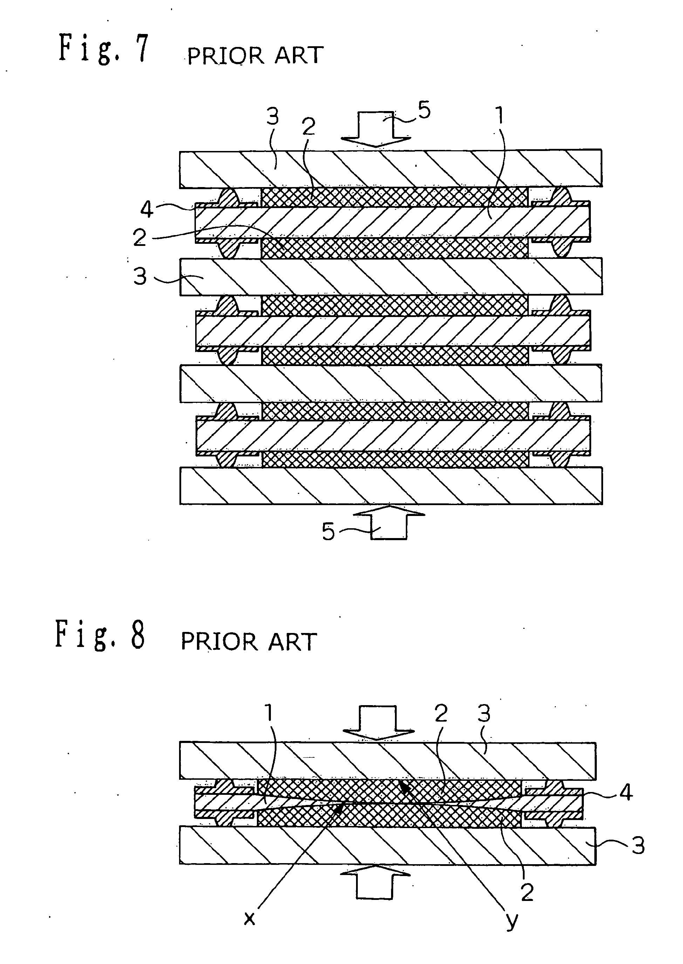

The basic structure of the related art polymer electrolyte type fuel cell will be described in connection with Fig. 7. Fig. 7 is a longitudinal sectional view illustrating the configuration of the related art polymer electrolyte type fuel cell stack.

A solid polymer electrolyte type fuel cell allows a fuel gas containing hydrogen and an oxidizer gas containing oxygen such as air to undergo electrochemical reaction to generate electricity and heat at the same time.

Referring to general structure, the solid polymer electrolyte type fuel cell comprises a polymer electrolyte membrane 1 which allows selective transportation of hydrogen ions upon the application of an electric field and a pair of gas diffusion electrodes 2 formed on the respective sides thereof.

The gas diffusion electrode 2 is mainly composed of a carbon powder having a platinum group metal catalyst supported thereon and comprises a catalyst layer formed in contact with the polymer electrolyte membrane 1 and a gas diffusion layer having air permeability and electronic conductivity in combination formed on the separator 3 side.

Further, the gas diffusion electrode 2 has a gasket 4 (or gas sealing material) disposed around the gas diffusion electrode 2 to prevent the two gases supplied from leaking or being mixed with each other.

The gasket 4 may have been previously assembled integrally with the gas diffusion electrode 2 and the polymer electrolyte membrane 1.

The configuration comprising the polymer electrolyte membrane 1 and the catalyst layer is referred to as "MEA (membrane-electrode assembly)".

In an ordinary polymer electrolyte type fuel cell, MEA is mechanically fixed and an electrically-conductive separator 3 for electrically connecting adjacent MEAs to each other in series is disposed. The lamination of a number of single cells essentially comprising MEA and electrically-conductive separator 3 produces a fuel cell stack.

The separator 3 is made of an electrically-conductive and airtight material having some corrosion resistance such as carbon plate and metal plate. In each of the single cells, a gas channel for supplying the reactive gas onto the surface of the electrode and removing the produced gas or extra gas is formed on the portion in contact with MEA of the separator 3.

The gas channel may be provided on the portion other than separator 3 such as the surface of the gas diffusion electrode. However, it is usual that a groove is provided on the surface of the separator 3 to form a gas channel.

In order to supply the reactive gas through the groove, a means is required for supplying and distributing the reactive gas into the respective single cells and collecting the gas produced in the gas diffusion electrode 2 and the residual gas and discharging these gases to the exterior of the cell.

The hole which is formed through the respective single cells to supply the fuel gas and oxidizer gas into the respective single cells and discharge these gases is referred to as "manifold".

Manifolds are divided into two types, i.e., internal manifold type which is a series of through-holes formed by laminating separators 3 each having a through-hole formed therein in the direction of stack and external manifold type formed on the side of a laminate of separators 3 as a structure other than the separator 3.

A fuel cell generates heat during operation and thus is required to be cooled with cooling water or the like to keep itself under good temperature conditions.

In general, a cooling portion which allows cooling water to flow every 1 to 3 cells is provided interposed between the separators 3. In most cases, a cooling water channel is provided on the back of the separator 3 to form a cooling portion. The supply of cooling water into the cooling portions and discharge of cooling water therefrom are conducted through the manifold formed through the respective cells as in the case of supply and discharge of the reactive gas.

An ordinary cell stack is obtained by laminating MEAs, separators 3 and cooling portions on each other to form a laminate of from 10 to 200 cells, clamping the stack between end plates with a collector and an insulating plate interposed therebetween, and then fixing the stack with a clamping bolt from both ends thereof.

As the fuel for polymer electrolyte type fuel cell there is used hydrogen. Hydrogen may be supplied from a hydrogen bottle or may be obtained by converting a hydrocarbon fuel to hydrogen through a modifier. As the oxidizer gas there may be used air.

Since the polymer electrolyte membrane 1 can be provided with a high hydrogen ionic conductivity only when it is hydrous, either the fuel gas or air to be supplied into the fuel cell is often provided with water vapor. For the supply of such a reactive gas into the fuel cell, a blower or compressor is used.

The electric power produced by the fuel cell is DC power, which is better used at a higher voltage to give a higher utility. Accordingly, DC power is converted to AC power having a higher voltage by a converter or inverter.

The electrochemical reaction of hydrogen with oxygen and the resulting generation of electric current are accompanied by the generation of heat. In order to keep the cell temperature constant, the heat thus generated is released to the exterior of the cell or the cell is cooled with a cooling medium. The heat which has been withdrawn to the exterior of the fuel cell is then utilized for hot water supply or heating in the household cogeneration system.

A fuel cell system comprises this fuel cell and a modifier, a power management portion such as converter and inverter, a heat utilization element and a control system for functionally operating these portions.

Among the gas diffusion electrodes 2, the electrode into which the fuel gas is supplied is referred to as "anode" while the electrode into which the oxidizer gas such as air is supplied is referred to as "cathode". During the generation of electricity, the anode acts as a negative electrode while the cathode acts as a positive electrode.

On the anode, hydrogen supplied is oxidized in the vicinity of the catalyst to produce hydrogen ions which are then released into the electrolyte. On the cathode, hydrogen ion supplied from the anode and oxygen in the oxidizer gas react to produce water.

Accordingly, these gas diffusion electrodes 2 must be highly air-permeable throughout their entirety so that all the electrodes can be thoroughly supplied with the reactive gas onto the surface of the catalyst which is a reaction site and the resulting water vapor and the unreacted carbonate gas, nitrogen, etc. can be readily discharged from the reaction site.

Similarly, it is important that these gas diffusion electrodes 2 each are arranged such that hydrogen ions and electrons can be easily supplied into the reaction site and discharged from the reaction site.

The gas supplied has been moistened at a dew point close to the cell temperature to enhance the hydrogen ionic conductivity of the electrolyte. Therefore, when the gas is consumed at any of the electrodes, supersaturated water vapor undergoes dew condensation on the interior of the electrodes.

The amount of water condensate is greater on the cathode because it also contains water content produced by the reaction.

The water condensate thus formed is then reevaporated in the gas supplied or discharged as water droplet along with the discharged gas into the gas discharge manifold via the gas supply passage.

As the method of producing MEA (membrane-electrode assembly) for polymer electrolyte type fuel cell there has heretofore been normally employed a method which comprises forming a polymer electrolyte membrane 1 according to an extrusion method, subjecting the electrolyte membrane 1 to heat treatment, forming a catalyst layer on both sides of the polymer electrolyte membrane 1 according to a printing method, transferring method or the like, and then forming a gas diffusion layer made of carbon paper, carbon cloth or the like on the outer side of the catalyst layer.

In recent years, it has sometimes been practiced to improve the cell performance and reduce the production costs by using a production method which comprises casting a polymer electrolyte membrane 1 into a sheet with polymer electrolyte solution, continuously forming an anode side catalyst layer and a cathode side catalyst layer in front and in rear of the sheet, and then subjecting the combination to heat treatment.

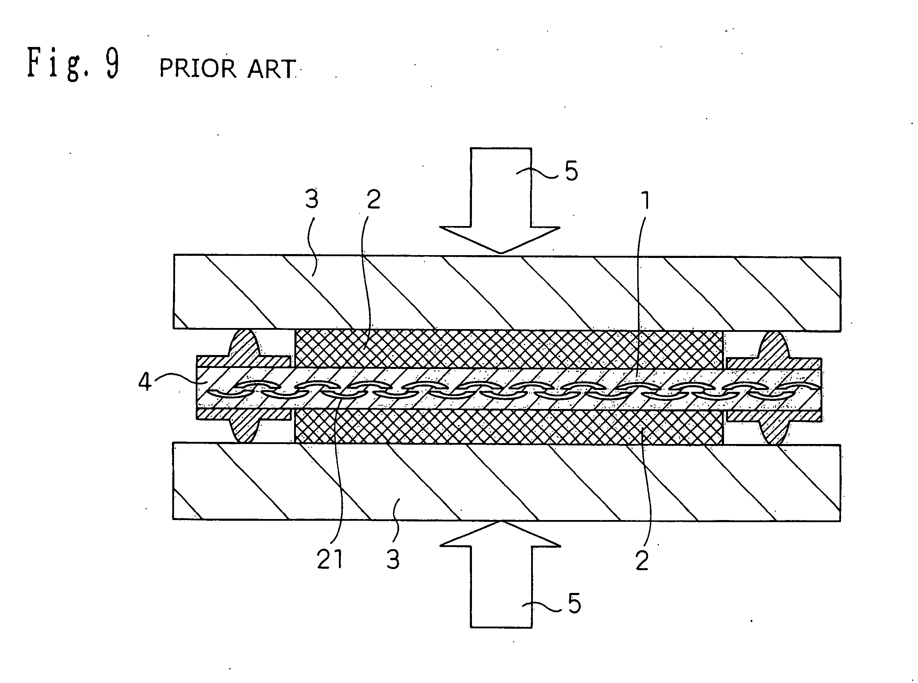

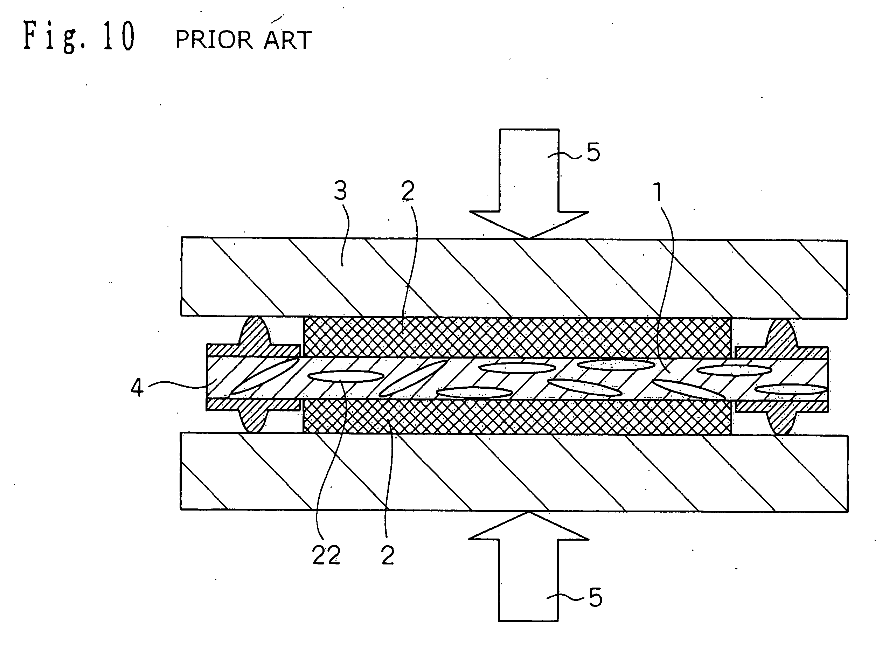

Further, in order to prevent the break of the polymer electrolyte membrane 1, pores 21 of a porous material or fibers 22 shown in Figs. 9 and 10, etc. may be utilized (see JP-A-8-162132, JP-A-8-213027, JP-A-8-329962, and JP-A-2001-345110). Fig. 9 is a longitudinal sectional view (first sectional view) illustrating a reinforcing structure for MEA for the related art polymer electrolyte type fuel cell, and Fig. 10 is a longitudinal sectional view (second sectional view) illustrating another reinforcing structure for MEA for the related art polymer electrolyte type fuel cell.

In general, a perfluorocarbonsulfonic acid to be used as a polymer electrolyte is formed by a main chain moiety for securing thermal and electrochemical stability and mechanical strength and a pendant moiety which takes part in ionic conduction. It is said that when the perfluorocarbonsulfonic acid actually acts as an electrolyte, the pendant moieties gather together to cause hydration of water molecules that forms an ionic conduction channel.

Further, in order to keep the ionic conductivity of the polymer electrolyte high, it is necessary that the gas supplied be moistened to keep the polymer electrolyte highly hydrous.

In general, such a polymer electrolyte has properties as viscoelastic material. In other words, when a predetermined tension (or compressive force) is kept applied to the electrolyte membrane, the initial elastic deformation is followed by plastic deformation, i.e., so-called creep. On the contrary, when a tension (or compressive force) causing a predetermined deformation is kept applied to the electrolyte membrane, the electrolyte membrane undergoes relaxation and reduction tension (or compressive force) with time, i.e., so-called stress relaxation.

A polymer electrolyte type fuel cell comprises a stack of basic configurations each comprising a polymer. electrolyte membrane 1, gas diffusion electrodes 2 with the polymer electrolyte membrane 1 interposed therebetween and a separator 3, clamped at a predetermined pressure on both ends thereof as shown in Fig. 7. Accordingly, a predetermined compressive pressure 5 is always applied to these constituents.

When a compressive pressure acts on the polymer electrolyte membrane 1 from the separator 3 via the catalyst layer and the gas diffusion layer over an extended period of time, the polymer electrolyte membrane 1 undergoes plastic deformation.

The catalyst layer and the gas diffusion layer each are essentially a porous material and have a complicated surface.

As a result, part of the polymer electrolyte membrane 1 which has undergone plastic deformation penetrates the interior of the catalyst layer or the gas diffusion layer in the part having a relatively low density or small mechanical strength as shown in Fig. 8. Fig. 8 is a longitudinal sectional view illustrating the cell in the related art polymer electrolyte type fuel cell stack after a prolonged operation.

Further, when creep proceeds, the reactive gas on the anode side and the cathode side are eventually mixed with each other to cause cross leak or the anode and the cathode make an electrical contact with each other to cause minute shortcircuiting as indicated by the sign x in Fig. 8.

The aforementioned cross leak or minute shortcircuiting not only causes the deterioration of cell performance by itself but also gives a new cause of performance deterioration due to local heat generation or drying or shortage of reactive gas.

The clamping pressure applied to the stack from both ends thereof is supported by the gasket 4 or sealing material arranged around MEA. At this point, the contact pressure applied by the separator 3 to the electrolyte membrane via the gas diffusion electrode 2 reaches a predetermined value. Then, the polymer electrolyte membrane 1 which is a viscoelastic material undergoes stress relaxation. Thus, the contact pressure decreases with time.

When the contact pressure across the catalyst layer and the gas diffusion layer and across the gas diffusion layer and the separator as shown by the sign y in Fig. 8 decrease, the contact resistance of electronic conduction increases, causing the rise of electricity generation loss at these sites. As a result, the cell performance is deteriorated.

An aim of the invention is to provide a fuel cell which is little subject to deterioration of performance and destruction caused by creep or stress relaxation phenomenon in the electrolyte and a process for the production thereof taking into account the aforementioned problems with the related art.

JP 07-135003 A discloses a fuel cell with an electrolytic film interposed between a positive and a negative electrode, wherein the film is formed of fluorine sulfonic acid high molecular resin-made cation exchange film of holding a granular unit dispersed of crosslinked polyacrylic acid salt high molecular resin having -COO- as a hydrophilic group.

EP 1,063,334 A discloses a non-woven fibre web comprising a plurality of first fibres of amorphous silica having an application in for example a fuel cell. Particulate materials may be incorporated within the membrane to increase either the sides available for proton migration and/or to increase the sides available for holding water within the substrate.

### SUMMARY OF THE INVENTION

According to the present invention, the above aim is achieved by a fuel cell comprising at least one electrolyte membrane interposed between electrodes by the application of a clamping pressure, with the features of the characterizing part of claim 1.

Namely, the inventors of the present invention found that neither fibers 22 as shown in present figure 10 nor pores 21 shown in present figure 9 are capable of counteracting the clamping pressure. Namely, they merely have a reinforcing capacity for preventing the break of the membrane resulting from shearing forces or tensions, which are different from pressure.

Namely, if means are provided for counteracting said clamping pressure, the compressive strength and the creep resistance of the overall membrane is enhanced. Thereby, deterioration of performance of the fuel cell and destruction thereof caused by creep or stress relaxation is prevented.

According to a further aspect of the invention, the predetermined member is preferably a granular member.

To this end, what is even more preferred is that the diameter of the granular member is substantially not greater than the thickness of the electrolyte membrane.

According to a further preferred embodiment of the invention, the diameter of the granular member is not smaller than 5 µm. In the case of more than one granular member, this applies to the average diameter.

According to the invention, it is preferable that said at least one predetermined member comprises a material having an EW value of more than 900, preferably 1000 or more, even more preferably at least 1100.

According to a further preferred embodiment, one or more of said predetermined members are incorporated in said electrolyte membrane, in an amount of 1% to 50 %, preferably 3% to 30%, more preferably 10 % to 30 % by volume.

The present invention is not limited to a single fuel cell. Rather, the invention covers a stack of 2 or more respective fuel cells as well, said fuel cells being laminated on each other.

In order to achieve the above aim, the invention not only provides a fuel cell and a stack of fuel cells, but also a process for the production of a fuel cell or a fuel cell stack comprising at least one membrane interposed between electrodes by the application of clamping pressure, particularly for the production of a fuel cell or a fuel cell stack as detailed above.

What is provided according to the invention is a step of incorporating at least one predetermined member into the electrolyte membrane for counteracting the clamping pressure.

### Brief Description of the Drawings

Fig. 1 is a schematic longitudinal sectional view illustrating the configuration of MEA for a solid polymer electrolyte type fuel cell according to the Embodiment 1 for carrying out the invention;
Fig. 2 is a schematic longitudinal sectional view illustrating the configuration of MEA for a solid polymer electrolyte type fuel cell according to the Embodiment 1 of implementation of the invention;
Fig. 3 is a partly enlarged diagram of MEA for a solid polymer electrolyte type fuel cell according to the Embodiment 1 of implementation of the invention;
Fig. 4 is a longitudinal sectional view illustrating the configuration of MEA for a solid polymer electrolyte type fuel cell according to the Embodiment 1 of implementation of the invention;
Fig. 5 is a schematic diagram illustrating the configuration of a device used in the evaluation of the creep resistance of the materials to be incorporated in the electrolyte membrane according to an embodiment of implementation of the invention;
Fig. 6(a) is a diagram (first diagram) illustrating the creep resistance of a material (polyvinyl-based resin) to be incorporated in the electrolyte membrane;
Fig. 6(b) is a diagram (second diagram) illustrating the creep resistance of another material (perfluorocarbonsulfonic acid) to be incorporated in the electrolyte membrane;
Fig. 6(c) is a diagram (third diagram) illustrating the creep resistance of a further material (PTFE) to be incorporated in the electrolyte membrane;
Fig. 7 is a longitudinal sectional view illustrating the configuration of the related art polymer electrolyte type fuel cell stack;
Fig. 8 is a longitudinal sectional view illustrating the cell in the related art polymer electrolyte type fuel cell after a prolonged operation;
Fig. 9 is a longitudinal sectional view (first sectional view) illustrating a reinforcing structure for MEA for the related art polymer electrolyte type fuel cell; and
Fig. 10 is a longitudinal sectional view (second sectional view) illustrating another reinforcing structure for MEA for the related art polymer electrolyte type fuel cell.

### Description of Reference Numerals

- 1: Polymer electrolyte membrane
- 2: Gas diffusion electrode
- 3: Separator
- 4: Gasket
- 5: Clamping force (compressive pressure)
- 11, 12, 13: Beads to be incorporated
- 15: Supporting force against clamping force

### PREFERRED EMBODIMENTS OF THE INVENTION

Embodiments of implementation of the invention will be described hereinafter in connection with the attached drawings.

### (Embodiment 1)

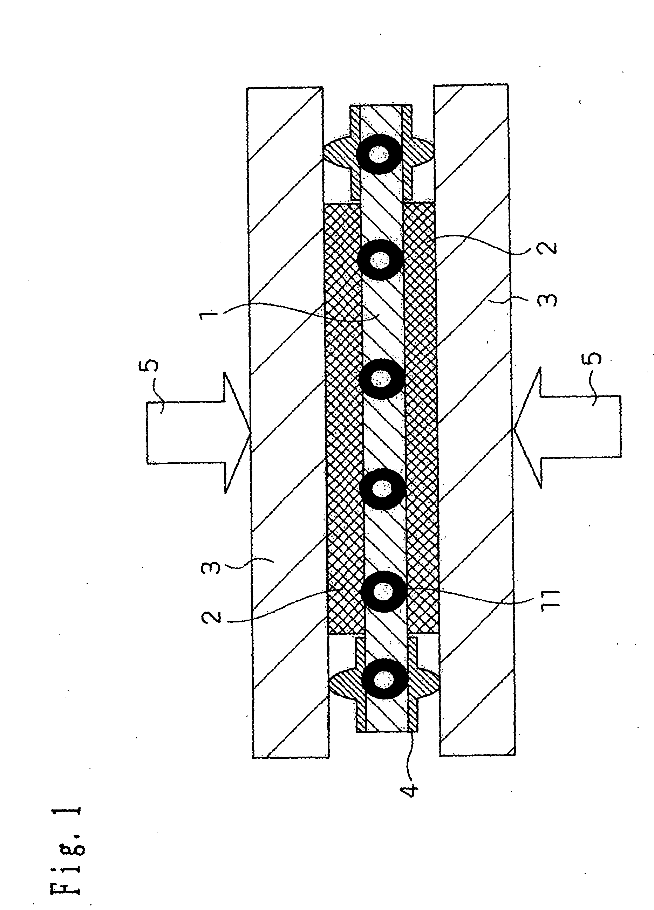

Firstly, the configuration of a polymer electrolyte type fuel cell according to the present mode for carrying out the invention will be described in connection mainly with Fig. 1. Fig. 1 is a schematic longitudinal sectional view illustrating the configuration of MEA for a solid polymer electrolyte type fuel cell according to the present mode for carrying out the invention.

The polymer electrolyte type fuel cell according to the present mode for carrying out the invention comprises a cell stack comprising a membrane-electrode assembly composed of a polymer electrolyte membrane 1 and a pair of gas diffusion electrodes 2 having the polymer electrolyte membrane 1 interposed therebetween and separators 3 laminated alternately on the membrane-electrode assembly wherein a clamping pressure is applied to the cell stack.

The polymer electrolyte type fuel cell according to the present mode for carrying out the invention is characterized by the arrangement that the polymer electrolyte membrane 1 has beads 11 having a greater creep resistance than the electrolyte membrane incorporated therein across the electrolyte membrane and the beads 11 support the clamping pressure on the cell stack.

The beads 11 each preferably have a particle diameter of greater than 5 µm on average and not greater than the thickness of the polymer electrolyte membrane 1. Further, the beads 11 each are made of a polymer electrolyte material different from the material constituting the electrolyte membrane.

A detailed configuration of the polymer electrolyte type fuel cell according to the present mode for carrying out the invention will be described hereinafter.

The polymer electrolyte membrane 1 is a hydrous fluorine-based or hydrocarbon-based membrane having a thickness of from 15 µm to 200 µm which is more subject to creep against stress as the ambient temperature is higher or the coexisting humidifying gas has a high relative humidity.

In order to form the electrolyte membrane by a single material so that the deterioration of performance or destruction of the fuel cell due to creep can be prevented, it is necessary that the creep resistance of the material itself be enhanced.

However, if it is desired to keep the hydrogen ionic conductivity high, the improvement of the material is limited.

Therefore, in order to enhance the creep resistance of the entire electrolyte membrane while maintaining the desired hydrogen ionic conductivity, the material of the electrolyte membrane comprises beads of a material having a higher rigidity and a high creep resistance such as zirconia, glass and fluororesin incorporated therein in addition to a material taking part mainly in hydrogen ionic conductivity.

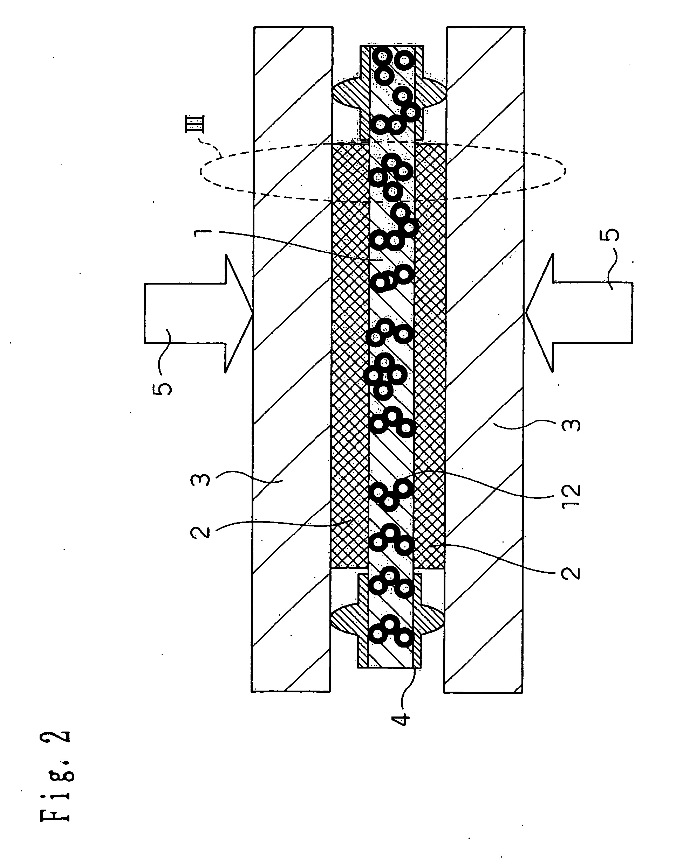

These beads are arranged as shown in Fig. 1 or 2 to support the compression 5 applied to the electrolyte membrane via a gas diffusion layer or catalyst layer. Fig. 2 is a schematic longitudinal sectional view illustrating the configuration of MEA for a solid polymer electrolyte type fuel cell according to the present mode for carrying out the invention.

In Fig. 1, the beads 11 having a high creep resistance and a particle diameter which is substantially the same as the thickness of the electrolyte membrane incorporated in the electrolyte membrane 1 support the compression.

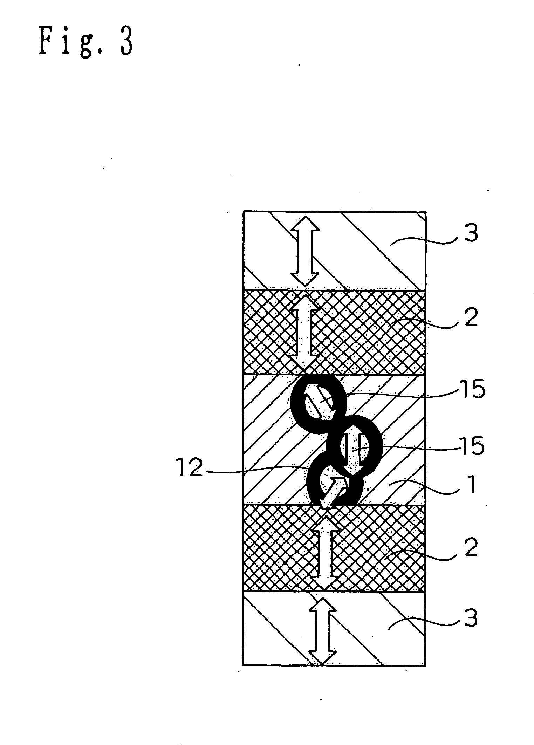

In Fig. 2, the beads 12 having a high creep resistance incorporated in the electrolyte membrane 1 come in contact with each other to form a supporting force 15 against the clamping force applied to the electrolyte membrane as shown in Fig. 3. Fig. 3 is a partly enlarged diagram of MEA for a solid polymer electrolyte type fuel cell according to the present mode for carrying out the invention (enlarged diagram of the portion III of Fig. 2).

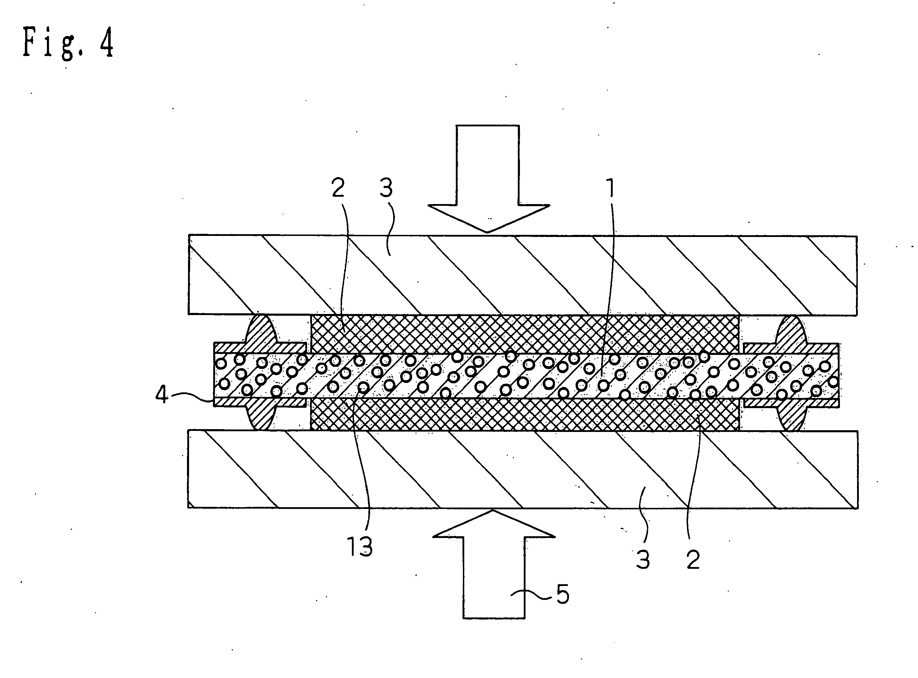

It goes without saying that even if the beads 13 incorporated in the electrolyte membrane don't come into direct contact with each other as shown in Fig. 4, the creep resistance of the mixed material is enhanced. Fig. 4 is a longitudinal sectional view illustrating the configuration of MEA for a solid polymer electrolyte type fuel cell according to the present mode for carrying out the invention.

Pores 21 and fibers 22 of a porous material having a reinforcing capacity for preventing the break of the polymer electrolyte membrane 1 shown in Fig. 9 or 10 which have heretofore been used are essentially different from the beads according to the present mode for carrying out the invention.

In other words, in Figs. 9 and 10, the pores 21 and the fibers 22 are provided to act to prevent the break of portions at which a shearing force or tension acts on the polymer electrolyte membrane 1 such as an edge of the gas diffusion electrode 2.

Accordingly, with view to the related art, it is important that the pores 21 are formed continuously in the direction along the surface of the electrolyte membrane as shown in Fig. 9 or the fibers 22 are formed overlapping each other as shown in Fig. 10.

On the contrary, in the present mode for carrying out the invention, the beads 13 are preferably formed continuously in the direction perpendicular to the surface of the electrolyte membrane or overlapping each other.

Thus, the configuration of the present mode for carrying out the invention is essentially different from that of the related art.

Referring to the material to be incorporated in the electrolyte membrane 1, tensile strength or shear strength is necessary in the configuration of the related art shown in Figs. 9 and 10 while compressive strength or creep resistance is important in the invention.

The gas diffusion electrode 2 corresponds to the electrode of the invention, the polymer electrolyte membrane 1 corresponds to the electrolyte membrane of the invention, and the beads 11 to 13 each correspond to the predetermined member of the invention.

The fuel cell of the invention and the process for the production thereof will be further described hereinafter in connection with the attached drawings.

### (Example 1)

Firstly, Ketjen Black EC (produced by AKZO Chemie Inc. of Holland), which is a particulate electrically-conductive carbon having an average primary particle diameter of 30 nm, having 50 wt-% particular platinum having an average particle diameter of about 30 angstrom supported thereupon was used as particle-supported catalyst for the cathode. On the other hand, Ketjen Black EC having particulate platinum and particulate ruthenium having an average particle diameter of about 30 angstrom supported thereon in an amount of 25% by weight, respectively, was used as particle-supported catalyst for the anode.

Subsequently, these carbon powders having a catalyst metal such as platinum supported thereupon were each dispersed in an alcohol solution of polymer electrolyte to make a slurry.

The alcohol solution of polymer electrolyte used was obtained by dispersing 16 wt-% perfluorocarbonsulfonic acid in ethyl alcohol (Flemion, produced by ASAHI GLASS COMPANY).

On the other hand, a carbon paper having a thickness of 400 µm which acts as an electrode was dipped in an aqueous dispersion of fluororesin (Neoflon ND1, produced by Daikin Industries, Ltd.), dried, and then subjected to heat treatment at 400°C for 30 minutes to render itself water-repellent.

Subsequently, the aforementioned slurry containing a carbon powder was uniformly spread over one side of the aforementioned carbon paper thus rendered water-repellent to form a catalyst layer thereon. Thus, a gas diffusion electrode was prepared. The size of the electrode was 6 cm × 6 cm.

The polymer electrolyte membrane was obtained by cast-molding the aforementioned polymer electrolyte solution into a sheet, drying the sheet, and then subjecting the sheet to heat treatment.

In other words, a solution comprising water containing 10 wt-% of a polymer electrolyte and ethyl alcohol as mixed solvent was concentrated by vacuum suction or the like to obtain a 16 wt-% high concentration solution. The high concentration solution was then mixed with polytetrafluoroethylene (PTFE) beads having an average particle diameter of 30 µm in an amount of 2 wt-% based on the total weight of the solution. The mixture was then stirred thoroughly.

The aforementioned PTFE bead-incorporated electrolyte solution was spread over a polyethylene terephthalate (PET) film coated with a fluorine-based release agent using a bar coater, and then dried.

By adjusting the number of spreading or the concentration of the coating solution, the thickness of the polymer electrolyte membrane dried was adjusted to 50 µm ± 5 µm.

The electrolyte membrane thus produced was cut into a size of 12 cm square which was then subjected to heat treatment at a temperature of 130°C for 30 to 60 minutes in a heat treatment device filled with nitrogen gas.

Two sheets of the carbon paper having a catalyst layer formed thereon were then laminated on each other with the catalyst layer sides thereof disposed opposed to each other and the solid polymer electrolyte membrane disposed interposed therebetween.

In order to prevent the gases supplied from leaking or being mixed with each other, a sheet (gasket) made of silicone rubber having a thickness of about 350 µm for gas seal was provided on the periphery of the electrode with the polymer electrolyte membrane disposed interposed therebetween. The laminate was then hot-pressed at a temperature of 100°C for 5 minutes to obtain MEA.

Two sheets of carbon separator having a gas channel formed on the surface of a sintered carbon plate by cutting were arranged such that the gas channel was opposed to the electrode. The laminate was then clamped by a clamping pressure of 5 kgwt/cm² applied thereto via a stainless steel end plate.

The fuel cell thus produced was then subjected to an evaluation test using pure hydrogen and air as reactive gas under the following conditions.

The evaluation test was conducted under standard condition I that the temperature of the cell is 75°C, the dew point of pure hydrogen gas supplied onto the anode is 70°C, the dew point of air supplied onto the cathode is 70°C, the percent utilization of hydrogen is 75%, the percent utilization of air is 40% and the current density is 0.2 A/cm².

The evaluation test was also conducted under accelerated condition II that accelerates more the creep in the electrolyte and the catalyst layer. This accelerated condition is the same as the standard condition I except that the temperature of the cell is 85°C, the dew point of hydrogen is 85°C and the dew point of air is 85°C.

A related art MEA having no second material such as PTFE beads incorporated in the electrolyte was subjected to evaluation tests under both conditions for reference.

These MEAs and operating conditions were combined to give four test conditions. 10 cells (N = 10) were tested for each of the four combinations. The cell evaluation test was conducted for 2,000 hours. The results are set forth in Table 1.

**Table 1**

| | Standard condition I | | Accelerated condition II | |
|---|---|---|---|---|
| | Number of cells which have been untestable up to 2,000 hours (in a total of 10 cells) | Deterioration rate (after 2,000 hours of elapse) | Number of cells which have been untestable up to 2,000 hours (in a total of 10 cells) | Deterioration rate (after 2,000 hours of elapse) |
| Example | 0 | 0 ∼ 2 mV/1000h | 1 | 4 mV/1000h |
| Comparative Example | 3 | 10 mV/1000h | 5 | 80 mV/1000h |

Actually, some of the cells showed a sudden deterioration of performance that disabled the continuance of the durability test during the evaluation test (cell destruction).

Further, even the cells which allowed the continuance of the durability test showed a great difference in deterioration rate depending on the configuration of MEA or testing conditions.

As can be seen in the results set forth in Table 1, MEA of the present example is little subject to cell destruction that disables the continuance of test as compared with MEA of the related art. It was also made obvious that the cells comprising MEA of the related art which had undergone destruction showed cross leak of hydrogen gas as much as about 10 times that of the cells which had undergone no destruction. It was further made obvious that the cells which had undergone destruction showed a DC resistance drop of about half that of those which had undergone no destruction, demonstrating that it is much likely that the creep of the electrolyte membrane caused the shortcircuiting of the two electrodes.

Further, the comparison of the test results under the standard condition I and the accelerated condition II made obvious that the probability of cell destruction is higher under the accelerated condition II than under the standard condition I. Accordingly, these results suggest that this cell destruction is caused by the creep of the electrolyte membrane taking into account the fact that the creep resistance of the electrolyte membrane deteriorates under high temperature and humidity conditions.

It was thus made obvious that the use of MEA having an improved membrane creep resistance makes it possible to inhibit the cell destruction during continuous operation.

It was also made obvious that the deterioration rate of MEA of the invention is much lower than MEA of the related art as set forth in Table 1, demonstrating that the use of MEA of the invention makes it possible to inhibit the deterioration of performance with the increase of contact resistance due to stress relaxation.

### (Example 2)

In the present example, the mixing proportion of beads incorporated in the membrane were studied.

It is thought that when a 16 wt-% solution of polymer electrolyte (Flemion, produced by ASAHI GLASS COMPANY) having 2 wt-% PTFE beads incorporated therein is casted to form a film, PTFE beads account for about 10% of the volume of the polymer electrolyte, though depending on the hydrous state of the polymer electrolyte membrane.

PTFE beads having an average particle diameter of 30 µm were incorporated in a polymer electrolyte solution in an amount of 0.3%, 1%, 3%, 10%, 30%, 50% and 70% by volume, respectively, and the polymer electrolyte solutions were each then casted to form a film in the same manner as in

### Example 1.

These MEAs were each then subjected to cell evaluation durability test in the same manner as in Example 1. As a result, it was confirmed that the cells comprising MEAs having PTFE beads incorporated therein in an amount of not smaller than 1% by volume have its advantage. In other words, those cells comprising membranes having beads incorporated therein in such an amount undergo destruction less frequently or show a lower deterioration rate than those comprising the related art MEAs.

The polymer electrolyte solutions having beads incorporated therein in an amount of greater than 50% by volume can be difficultly casted to form a film.

The mixing proportion of materials which has an effect on the cell durability is probably affected greatly by the specific gravity, shape, particle diameter (powder diameter), creep resistance, etc. of the materials incorporated.

It is also thought that the mixing proportion of materials depends greatly on the sealing structure or clamping structure of cell stack taking into account the mechanism causing cell destruction or the mechanism of performance deterioration caused by the increase of contact resistance due to the drop of contact pressure.

### (Example 3)

In the present example, the materials to be incorporated in the electrolyte membrane were studied to inhibit the deterioration of performance caused by the creep or stress relaxation of the electrolyte membrane.

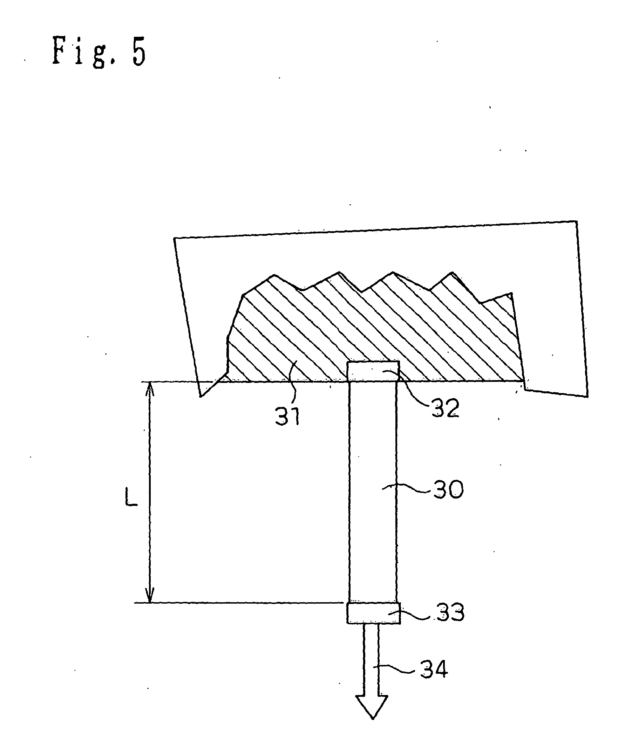

Firstly, the perfluorocarbonsulfonic acid, PTFE and polyvinyl-based resin as used as electrolyte material in Example 1 were each cut into a strip having a thickness of 200 µm, a width of 10 mm and a length of 50 mm which was then measured for creep properties according to the method shown in Fig. 5. Fig. 5 is a schematic diagram illustrating the configuration of a device used in the evaluation of the creep resistance of the materials to be incorporated in the electrolyte membrane according to an embodiment of implementation of the invention.

The device is arranged such that a tensile load 34 is applied to a specimen 30 fixed at an upper chuck 32 mounted on a base 31 and a lower chuck 33.

A predetermined tensile load 34 (100 to 500 gwt) was then applied to the aforementioned three specimens at both ends thereof. The elapsed time and the length L of the specimen were then measured.

During the measurement, the atmosphere was kept at a relative humidity of 50% so that moisture conditioning was kept constant.

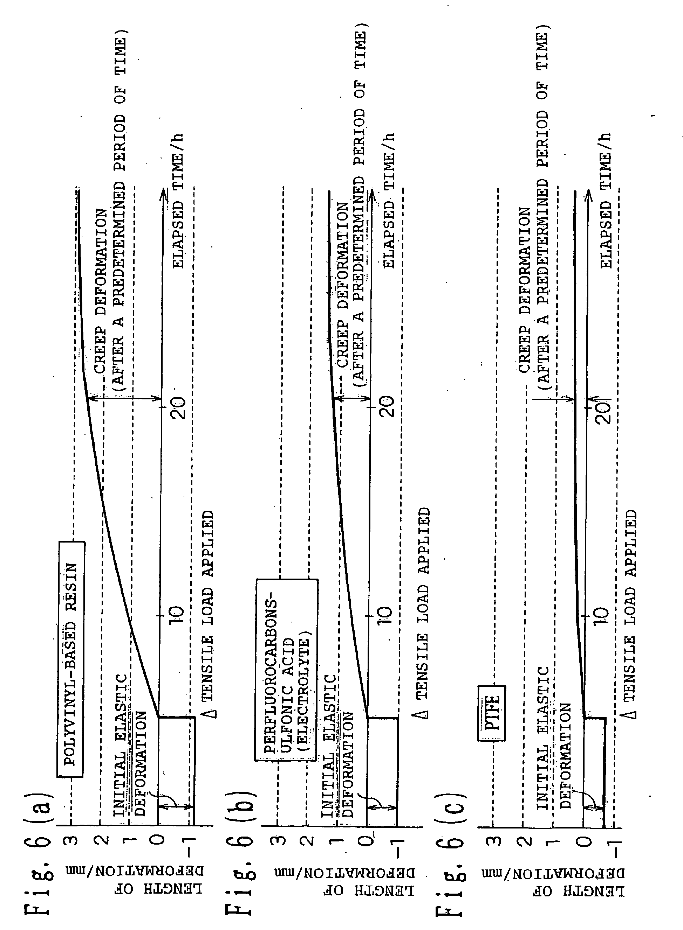

As can be seen in Figs. 6(a) to 6(c), all the specimens show an instantaneous deformation with the application of tensile load but then gradually stretch with time. Fig. 6(a) is a diagram (first diagram) illustrating the creep resistance of a material (polyvinyl-based resin) to be incorporated in the electrolyte membrane. Fig. 6(b) is a diagram (second diagram) illustrating the creep resistance of another material (perfluorocarbonsulfonic acid) to be incorporated in the electrolyte membrane. Fig. 6(c) is a diagram (third diagram) illustrating the creep resistance of a further material (PTFE) to be incorporated in the electrolyte membrane.

As opposed to instantaneous deformation shortly after pulling (elastic deformation), the elongation developed after a predetermined period of time of elapse (1 to 5 hours) following the application of tensile load is defined to be creep deformation.

Among the specimens of perfluorocarbonsulfonic acid, PTFE and polyvinyl-based resin used in the experiment, the specimen of polyvinyl-based resin showed the greatest creep deformation. The specimen of perfluorocarbonsulfonic acid showed the second greatest creep deformation. The specimen of PTFE showed the smallest creep deformation.

It can be said that the smaller the creep deformation is, the greater is the creep resistance.

The aforementioned polyvinyl-based resin, too, was incorporated in the electrolyte membrane in the form of beads having an average particle diameter of 30 µm in the same manner as in Examples 1 and 2 to produce MEA.

However, MEA having this polyvinyl-based resin incorporated therein could not be provided with a reduced probability or a deterioration rate that causes sudden cell destruction.

Further, the aforementioned MEA obviously showed a greater frequency of occurrence of cell destruction as compared with the related art MEA.

This is probably because the incorporation of the polyvinyl-based resin having a smaller creep resistance than the electrolyte membrane in the electrolyte membrane causes the reduction of the creep resistance of MEA or the electrolyte membrane itself.

In the present example, a tensile deformation test as shown in Fig. 5 was conducted to make comparison of creep resistance. The load applied to the specimen as MEA is compressive force applied across the membrane. However, it is thought that a material having a high tensile creep resistance exhibits a high creep resistance also during compression.

### (Example 4)

In the present example, perfluorocarbonsulfonic acid, which is a main material of electrolyte, was studied as a candidate of materials having a higher creep resistance.

A perfluorocarbonsulfonic acid having EW value of 900 as used in Examples 1 to 3 was used.

EW value is a parameter for the concentration of ion exchange group (such as sulfone group). The greater EW value is, the smaller is the concentration of ion exchange group and the more difficultly can occur plastic deformation.

As a result of the measurement of creep resistance according to the method shown in Fig. 5, it was confirmed that the greater EW value is, the higher is creep resistance.

An electrolyte solution (16 wt-%) having EW value of 1,100 was sprayed into dried nitrogen (about 110°C) to produce perfluorocarbonsulfonic acid powders having various particle diameters. These perfluorocarbonsulfonic acid powders were each then subjected to heat treatment at a temperature of from 120°C to 130°C for about 30 minutes to enhance its difficulty in dissolution in solvent. These powders were each then casted to form a film in the same manner as in Example 1.

The cells comprising these membranes, too, were confirmed to exhibit improved durability. These cells have EW value as high as 1,100 and a slightly reduced ionic conductivity, but are considered to maintain its total ionic conductivity higher than those comprising membranes having PTFE or hard glass incorporated therein.

It is also presumed that the break resistance at sites where shearing stress or tensile stress is applied to the electrolyte membrane is also improved because these cells comprise the same perfluorocarbonsulfonic acid and the perfluorocarbonsulfonic acid particles thus incorporated have good bonding properties with the materials constituting the electrolyte.

Thus, the structure of the main chain moiety of the macromolecular material incorporated may be the same as that of the material constituting the electrolyte membrane. However, the properties of matter (e.g. EW value, the glass transition temperature or the like), particularly the dynamic properties of the macromolecular material incorporated are preferably different from those of the material constituting the electrolyte membrane.

### (Comparative example 1)

In the present example, the form of incorporation of materials having an excellent creep resistance was studied.

The method of reinforcing the related art MEA, particularly the electrolyte membrane, is a method of enhancing the tensile strength of material using a porous material of PTFE having pores 21 or fibers 22 as a core material as shown in Figs. 9 and 10.

In order to confirm the difference between the electrolyte membrane and MEA comprising such a reinforcing core material and the invention, the following experiment was conducted.

PTFE beads having an average particle diameter of 10 µm were incorporated in the electrolyte solution in an amount such that the weight proportion thereof is equal to that of the electrolyte after drying. The mixture was then used to form a sheet having a thickness of 20 µm.

Subsequently, the electrolyte solution was batchwise casted onto the sheet thus formed to produce an electrolyte membrane having a total thickness of 50 µm.

The aforementioned electrolyte membrane was used to produce MEA. This MEA was then observed on its section under a microscope.

This MEA was then subjected to a durability evaluation test in the form of cell in the same manner as in Example 1. As a result, the aforementioned MEA exhibited a great deterioration rate and a great probability of occurrence of cell destruction as compared with MEA having a sectional configuration shown in Figs. 1, 2 and 4.

MEA having a sectional configuration shown in Fig. 7 cannot provide an improvement of durability as in the invention probably because it provides no improvement of creep resistance in the direction of compression of electrolyte membrane as in MEA shown in Figs. 9 and 10.

An electrolyte membrane comprising PTFE beads having an average particle diameter of 10 µm incorporated therein in an amount of 1 wt-% was then subjected to a durability evaluation test in the form of cell.

In the section of the electrolyte membrane comprising a relatively small amount of PTFE beads incorporated therein, the particles incorporated in the electrolyte membrane don't necessarily come into direct contact with each other to support the load applied across the membrane as shown in Fig. 4.

However, it was confirmed in the durability evaluation test in the form of actual cell that these cells have an improved durability. It is thought that the incorporation of such a foreign material causes the enhancement of threshold stress against the plastic deformation of the membrane even if the membrane is not arranged to directly support the compressive load, resulting in the enhancement of durability.

It is thought that this phenomenon is similar to the phenomenon that the incorporation of a solid powder having a higher hardness in a rubber or resin as a filler makes it possible to improve the deformation resistance or abrasion resistance thereof.

The aforementioned example involves the use of a perfluorocarbonsulfonic acid as an electrolyte membrane.

It is thought that even if other hydrocarbon-based membranes are used, the introduction of the configuration of the invention makes it possible to improve the durability thereof.

In the invention, it has been generally expressed in the aforementioned examples that "beads" are used as materials having a high creep resistance to be incorporated in the electrolyte membrane. However, the materials to be incorporated in the electrolyte membrane are not necessarily in the form of sphere or grain.

In the case of the configuration shown in Fig. 4, it is thought that flat particles or particles having much surface roughness provide more improvement of creep resistance of the electrolyte membrane. Actually, the comparison of an electrolyte membrane comprising a leaf glass powder obtained by crushing hard glass with the electrolyte membrane comprising particles obtained by the use of a ball mill in Example 2 in durability defined in the aforementioned examples showed that the electrolyte membrane having a fine leaf glass powder incorporated therein as an inclusion exhibits a high durability.

Further, the configuration as used in the phosphoric acid type fuel cell and molten carbonate type fuel cell, i.e., configuration having the continuous presence of a polymer electrolyte in the voids of a structural material (porous material, etc.) having a high creep resistance to secure a desired hydrogen ionic conductivity between the two electrodes is desirable for the enhancement of durability.

In the aforementioned description, Examples 1 to 4 of the invention have been described in detail.

### Advantages of the Invention

As mentioned above, the creep resistance of the entire electrolyte membrane can be enhanced while maintaining the desired hydrogen ionic conductivity. In this arrangement, the mixing of reactive gases on the anode side and cathode side or minute shortcircuiting of the two electrodes due to plastic deformation of electrolyte membrane can be prevented, making it possible to provide a polymer electrolyte membrane type fuel cell which can make stable operation over an extended period of time.

The invention is advantageous in that the performance deterioration or destruction of fuel cell caused by creep or stress relaxation in electrolyte can be inhibited.

## Claims

1. A fuel cell comprising at least one electrolyte membrane (1) interposed between electrodes (2, 2) by the application of a clamping pressure, wherein at least one member (11, 12, 13) for counteracting the clamping pressure is incorporated in the electrolyte membrane (1),
**characterized in that**
said member (11, 12, 13) is composed of a polymer-compound whose structure of the main chain moiety is the same as that of the material constituting the electrolyte membrane (1), and whose creep resistance is greater than that of the electrolyte membrane (1), and **in that** said member (11, 12, 13) is formed continuously in the direction perpendicular to the surface of the membrane (1).

2. The fuel cell as defined in claim 1, wherein the polymer-compound is in form of a granular member.

3. The fuel cell as defined in claim 2, wherein the diameter of the granular member (11, 12, 13) is not greater than the thickness of the electrolyte membrane (1).

4. The fuel cell as defined in claim 2 or 3, wherein the diameter of the granular member is not smaller than 5 µm.

5. The fuel cell as defined in any preceding claim, wherein said at least one polymer-compound comprises a material having an EW value of more than 900, preferably 1000 or more, more preferably at least 1100, wherein the EW value is a parameter for the concentration of ion exchange group.

6. The fuel cell as defined in any preceding claim, wherein one or more of said polymer-compounds are incorporated in said electrolyte membrane (1), in an amount of 1% to 50%, preferably 3% to 30%, more preferably 10% to 30% by volume.

7. A stack of 2 or more fuel cells as defined in any preceding claim, laminated on each other.

8. A process for the production of a fuel cell or a fuel cell stack comprising at least one membrane (1) interposed between electrodes (2, 2) by the application of a clamping pressure, particularly for the production of a fuel cell or a fuel cell stack as defined in any preceding claim, comprising a step of incorporating at least one member (11, 12, 13) for counteracting the clamping pressure into the electrolyte membrane (1),
**characterized in that**
said member (11, 12, 13) is composed of a polymer-compound whose structure of the main chain moiety is the same as that of the material constituting the electrolyte membrane (1), and whose creep resistance is greater than that of the electrolyte membrane (1), and **in that** said member (11, 12, 13) is incorporated such that it is formed continuously in the direction perpendicular to the surface of the membrane (1).

## Patentansprüche

1. Brennstoffzelle, umfassend zumindest eine Elektrolytmembran (1), die angeordnet ist zwischen Elektroden (2, 2) durch die Beaufschlagung eines Klemmdrucks, wobei zumindest ein Teil (11, 12, 13), das dem Klemmdruck entgegenwirkt, in die Elektrolytmembran (1) eingegliedert ist,
**dadurch gekennzeichnet, dass**
das Teil (11, 12, 13) aus einer Polymerverbindung besteht, deren Struktur des Hauptkettenteils die gleiche ist wie jene des Materials, das die Elektrolytmembran (1) bildet, und deren Kriechwiderstand größer ist als jener der Elektrolytmembran (1), und dass das Teil (11, 12, 13) kontinuierlich geformt ist in zur Oberfläche der Membran (1) perpendikularer Richtung.

2. Brennstoffzelle nach Anspruch 1, wobei die Polymerverbindung in Form eines körnigen Teils vorliegt.

3. Brennstoffzelle nach Anspruch 2, wobei der Durchmesser des körnigen Teils (11, 12, 13) nicht größer ist als die Dicke der Elektrolytmembran (1).

4. Brennstoffzelle nach Anspruch 2 oder 3, wobei der Durchmesser des körnigen Teils nicht kleiner als 5 µm ist.

5. Brennstoffzelle nach einem der vorstehenden Ansprüche, wobei die zumindest eine Polymerverbindung ein Material umfasst, das einen EW-Wert über 900, bevorzugt von 1000 oder mehr, besonders bevorzugt von wenigstens 1100 aufweist, wobei der EW-Wert ein Parameter für die Konzentration der lonenaustauschgruppe ist.

6. Brennstoffzelle nach einem der vorstehenden Ansprüche, wobei eine oder mehrere der Polymerverbindungen in die Elektrolytmembran (1) eingegliedert sind, und zwar in einer Menge von 1 Vol.-% bis 50 Vol.-%, bevorzugt 3 Vol.-% bis 30 Vol.-%, besonders bevorzugt 10 Vol.-% bis 30 Vol.-%.

7. Stapel aus zwei oder mehr Brennstoffzellen wie in einem der vorstehenden Ansprüche definiert, die aufeinanderlaminiert sind.

8. Verfahren zur Herstellung einer Brennstoffzelle oder eines Brennstoffzellenstapels, umfassend zumindest eine Membran (1), die angeordnet ist zwischen Elektroden (2, 2) durch die Beaufschlagung eines Klemmdrucks, insbesondere zur Herstellung einer Brennstoffzelle oder eines Brennstoffzellenstapels wie in einem der vorstehenden Ansprüche definiert, umfassend einen Schritt des Eingliedems zumindest eines Teils (11, 12, 13), das dem Klemmdruck entgegenwirkt, in die Elektrolytmembran (1),
**dadurch gekennzeichnet, dass**
das Teil (11, 12, 13) aus einer Polymerverbindung besteht, deren Struktur des Hauptkettenteils die gleiche ist wie jene des Materials, das die Elektrolytmembran (1) bildet, und deren Kriechwiderstand größer ist als jener der Elektrolytmembran (1), und dass das Teil (11, 12, 13) so eingegliedert wird, dass es kontinuierlich geformt ist in zur Oberfläche der Membran (1) perpendikularer Richtung.

## Revendications

1. Pile à combustible comprenant au moins une membrane électrolytique (1) interposée entre des électrodes (2, 2) sous l'application d'une pression de serrage, dans laquelle au moins un élément (11, 12, 13) destiné à s'opposer à la pression de serrage est incorporé dans la membrane électrolytique (1),
**caractérisé en ce que**
ledit élément (11, 12, 13) se compose d'un composé polymère dont la structure de la fraction de chaîne principale est la même que celle du matériau constituant la membrane électrolytique (1), et dont la résistance au fluage est supérieure à celle de la membrane électrolytique (1), et **en ce que** ledit élément (11, 12, 13) est formé de manière continue dans le sens perpendiculaire à la surface de la membrane (1).

2. Pile à combustible selon la revendication 1, dans laquelle le composé polymère se trouve sous la forme d'un élément granulaire.

3. Pile à combustible selon la revendication 2, dans laquelle le diamètre de l'élément granulaire (11, 12, 13) ne dépasse pas l'épaisseur de la membrane électrolytique (1).

4. Pile à combustible selon la revendication 2 ou 3, dans laquelle le diamètre de l'élément granulaire n'est pas inférieur à 5 µm.

5. Pile à combustible selon l'une quelconque des revendications précédentes, dans laquelle l'au moins un composé polymère comprend un matériau dont la valeur EW est supérieure à 900, de préférence de 1000 ou plus, et plus préférablement d'au moins 1100, la valeur EW étant un paramètre relatif à la concentration du groupe échangeur d'ions.

6. Pile à combustible selon l'une quelconque des revendications précédentes, dans laquelle lesdits un ou plusieurs composés polymères sont incorporés dans ladite membrane électrolytique (1) dans une quantité allant de 1 % à 50 %, de préférence de 3 % à 30 %, plus préférablement de 10 % à 30 % en volume.

7. Empilement de deux, ou plus de deux, piles à combustible selon l'une quelconque des revendications précédentes, stratifiées l'une sur l'autre.

8. Procédé de production d'une pile à combustible ou d'un empilement de piles à combustible comprenant au moins une membrane (1) interposée entre des électrodes (2, 2) sous l'application d'une pression de serrage, servant notamment à la production d'une pile à combustible ou d'un empilement de piles à combustible selon l'une quelconque des revendications précédentes, comprenant une étape d'incorporation, dans la membrane électrolytique (1), d'au moins un élément (11, 12, 13) destiné à s'opposer à la pression de serrage,
**caractérisé en ce que**
ledit élément (11, 12, 13) se compose d'un composé polymère dont la structure de la fraction de chaîne principale est la même que celle du matériau constituant la membrane électrolytique (1), et dont la résistance au fluage est supérieure à celle de la membrane électrolytique (1), et **en ce que** ledit élément (11, 12, 13) est incorporé de manière à être formé de manière continue dans le sens perpendiculaire à la surface de la membrane (1).
